# FASCICULE DE BREVET EUROPEEN

(11) **EP 3 673 223 B1**
(45) Date de publication et mention de la délivrance du brevet: **25.08.2021**
(21) Numéro de dépôt: 18749855.5
(22) Date de dépôt: 11.07.2018
(51) Int. Cl.: F41G 7/22, F41G 3/14, F41G 3/02, F41G 3/16, F41G 3/32, F41G 3/00

(54) **INSTRUMENT D'IMAGERIE POUR CONTROLER UNE DESIGNATION DE CIBLE**
BILDGEBUNGSINSTRUMENT ZUR STEUERUNG EINER ZIELBEREITSTELLUNG
IMAGING INSTRUMENT FOR CONTROLLING A TARGET DESIGNATION

(30) Priorité: 24.08.2017 FR 1700873
(43) Date de publication de la demande: 01.07.2020
(73) Titulaire: Safran Electronics & Defense, 75015 Paris (FR)
(72) Inventeur: ROBERT, Patrick, 75015 Paris (FR); SIK, Hervé, 75015 Paris (FR)
(74) Mandataire: Plasseraud IP
(86) Numéro de dépôt international: PCT/FR2018/051741
(87) Numéro de publication internationale: WO 2019/038486

(56) Documents cités:
- US-A- 4 669 809
- US-A- 4 737 028
- US-A- 4 843 235
- US-A1- 2013 112 879

## Description

La présente invention concerne un instrument d'imagerie pour contrôler une désignation de cible.

Il est courant de désigner une cible distante au moyen d'un faisceau lumineux, notamment au moyen d'un faisceau laser, pour permettre à un engin autoguidé de se diriger vers la cible avec une précision élevée. En fait, la tache lumineuse que produit le faisceau sur la cible sert de repère de guidage pour l'engin : un système de détection qui est embarqué à bord de l'engin autoguidé détecte la tache lumineuse, et un système de direction de l'engin maintient sa trajectoire vers la tache lumineuse, jusqu'à ce que l'engin parvienne à la cible. La précision de l'impact de l'engin autoguidé sur la cible dépend donc directement de la précision avec laquelle le faisceau est dirigé puis maintenu sur la cible. Pour cela, des instruments d'imagerie sont utilisés, qui permettent de contrôler en temps réel que la tache du faisceau lumineux est bien située sur la cible. De tels instruments permettent de visualiser simultanément la scène, par exemple un paysage extérieur, dans laquelle se trouve la cible, par exemple un véhicule, et la tache lumineuse qui est produite par le faisceau de désignation de cible, sur la cible ou à proximité de celle-ci. Lorsque l'observation à travers l'instrument révèle que la tache lumineuse de désignation de cible n'est pas sur la cible voulue, la direction du faisceau lumineux de désignation de cible peut être corrigée pour ramener la tache lumineuse plus précisément sur la cible.

Le plus souvent, la scène est imagée par l'instrument en utilisant du rayonnement infrarouge, par exemple à l'intérieur d'un intervalle de longueur d'onde qui s'étend entre 3 µm (micromètre) et 15 µm, et le rayonnement du faisceau de désignation de cible possède une longueur d'onde égale à 1,06 µm. Le rayonnement de désignation de cible est alors situé en dehors de l'intervalle spectral du rayonnement qui est utilisé pour saisir la scène en image. L'utilisation d'instruments utilisant du rayonnement infrarouge est nécessaire pour obtenir des portées de désignation qui sont importantes. On parlera dans ce cas de longues portées.

Des applications diurnes ou par faibles conditions d'éclairement sont aussi envisagées avec un faisceau de désignation qui possède encore une longueur d'onde égale à 1,06 µm, mais avec des détecteurs qui sont sensibles à la fois dans le domaine visible et le domaine infrarouge proche, couramment désigné par NIR, ou qui sont sensibles seulement dans le domaine NIR. Par définition, le domaine NIR correspond à l'intervalle de longueur d'onde qui est compris entre 0,8 µm et 1,5 µm. Les portées de systèmes qui utilisent ces instruments sont plus faibles que celles des systèmes utilisant le rayonnement infrarouge dont la longueur d'onde est comprise entre 3 µm et 15 µm, et on parlera dans ce cas de moyennes portées.

Dans des instruments existants d'un premier type, l'image de la scène et la tache du faisceau de désignation de cible sont saisies avec deux capteurs d'images, qui sont sensibles dans deux intervalles séparés de longueur d'onde. Mais il existe alors une incertitude quant à l'exactitude avec laquelle les images qui sont produites séparément par les deux capteurs sont ensuite superposées, pour qu'un opérateur puisse vérifier avec précision l'emplacement de la tache de désignation de cible à l'intérieur de la scène. A cause de cela, il y a un intérêt important à disposer d'un instrument de contrôle de désignation de cible qui utilise un capteur unique pour saisir l'image de la scène et simultanément faire apparaître la tache de désignation de cible dans cette image de scène.

De tels autres instruments, chacun à capteur d'image unique pour saisir à la fois la scène et la tache de désignation de cible, existent aussi. Mais le bruit photonique de l'image de la scène telle qu'elle est produite par ce capteur unique est important. Alors, à cause de ce bruit photonique important, la tache de désignation de cible devient peu visible, ou presqu'invisible, au sein de l'image de la scène lorsque la cible est située à grande distance de l'instrument. Typiquement, pour les applications à longues portées, la visibilité de la tache de désignation de cible devient insuffisante lorsque la cible est éloignée à plus de 5 km (kilomètre) de l'instrument. Or il existe des circonstances qui nécessitent de contrôler la désignation d'une cible avec une fiabilité élevée alors que la cible est éloignée d'au moins 10 ou 15 km de l'instrument d'imagerie qui est utilisé pour ce contrôle. Pour les applications dites à moyennes portées, la visibilité de la tache peut être insuffisante dès 2 km selon les conditions atmosphériques ou opérationnelles.

En particulier, les documents US 4,737,028 et US 2013/0112879 décrivent de tels instruments d'imagerie thermique et de pointage laser, qui n'utilisent chacun qu'un seul capteur d'image matriciel.

A partir de cette situation, l'invention a pour but d'améliorer les conditions et la fiabilité du contrôle de la désignation d'une cible, lorsqu'un instrument de contrôle est utilisé qui ne possède qu'un seul capteur d'image. En particulier, l'invention a pour but de fournir une image de la tache de désignation de cible en utilisant un tel instrument, avec un contraste et/ou un rapport signal-sur-bruit qui est (sont) amélioré(s).

Elle a pour but annexe de combiner une telle amélioration avec une simplicité, une rapidité et un confort d'utilisation de l'instrument qui sont maintenus ou améliorés.

Pour cela, l'invention propose un nouvel instrument d'imagerie pour contrôler une désignation de cible, qui comprend :
- un objectif, adapté pour former une image d'une scène avec un premier rayonnement, dit rayonnement naturel, qui provient d'éléments de la scène, et adapté pour que l'image formée contienne une contribution provenant d'une cible qui est contenue dans la scène, cette contribution étant produite par un second rayonnement, dit rayonnement de pointage, qui est rétrodiffusé par la cible ; et
- un capteur d'image matriciel, comprenant des éléments de pixels qui sont chacun sensibles simultanément au rayonnement naturel et au rayonnement de pointage, le capteur d'image étant disposé pour saisir l'image formée par l'objectif.

Autrement dit, l'instrument de l'invention est du type à capteur d'image unique tel que présenté plus haut. L'image qui est saisie par le capteur constitue en effet une représentation de la scène, dans laquelle le rayonnement naturel et le rayonnement de pointage contribuent ensemble à faire apparaître au sein de la scène imagée, la cible qui est éclairée par le rayonnement de pointage.

Selon l'invention, l'instrument comprend en outre :
- un filtre qui recouvre une zone limitée du capteur d'image, dite zone de confirmation, et qui est adapté pour transmettre aux éléments de pixels qui sont contenus dans cette zone de confirmation, sélectivement le rayonnement de pointage à l'exclusion du rayonnement naturel ou à l'exclusion d'une partie du rayonnement naturel qui est séparée spectralement du rayonnement de pointage.

Ainsi, lorsque l'instrument est orienté vers la scène de façon à ce que la cible soit imagée dans la zone de confirmation du capteur d'image, la cible n'apparaît dans l'image saisie que par le rayonnement de pointage rétrodiffusé, ou apparaît dans l'image saisie principalement par ce rayonnement de pointage rétrodiffusé, tant que la cible est plus petite que la zone de confirmation.

Si l'image de la tache du rayonnement de pointage sur la cible est plus petite que la zone de confirmation, alors cette image de la tache apparaît sur un fond noir ou sombre dans la zone de confirmation, si bien qu'elle présente un contraste important, et est ainsi très visible.

De plus, de façon générale, le filtre supprime le bruit photonique du rayonnement naturel dans la zone de confirmation, si bien qu'il ne reste dans cette zone que le bruit photonique du rayonnement de pointage rétrodiffusé. Or le bruit photonique du rayonnement de pointage rétrodiffusé est plus faible, typiquement au moins quatre fois plus faible, que le bruit photonique du rayonnement naturel dans l'image de la scène, de sorte que la tache de désignation de cible apparaît beaucoup plus clairement dans la zone de confirmation.

Ainsi, lorsque la cible est repérée dans l'image de la scène qui est saisie par le capteur d'image, par un opérateur du contrôle de la désignation de cible, cet opérateur peut déplacer la ligne de visée optique de l'instrument en le tournant, pour amener l'image de la cible dans la zone de confirmation. Il peut alors visualiser la tache du rayonnement de pointage rétrodiffusé à l'intérieur de la zone de confirmation avec un contraste et un rapport signal-sur-bruit qui sont supérieurs, et vérifier de cette façon avec plus de certitude si cette tache est située précisément sur la cible ou décalée par rapport à celle-ci. Un tel déplacement de la ligne de visée est appelé dépointage dans le jargon de l'Homme du métier, et constitue une manœuvre qui est particulièrement rapide et simple pour l'opérateur, afin de contrôler que la tache de désignation est précisément sur la cible.

Un tel instrument conforme à l'invention peut être adapté en particulier pour que la longueur d'onde du rayonnement naturel qui est détecté par les éléments de pixels du capteur d'image, soit comprise
- soit entre 3 µm et 15 µm, et dans ce cas la longueur d'onde du rayonnement de pointage qui est aussi détecté par les éléments de pixels du capteur d'image, est comprise entre 1,00 µm et 1,10 µm, en pouvant être égale plus spécifiquement à 1,064 µm ;
- soit entre 0,36 µm et 1,5 µm, avec dans cet autre cas un rayonnement de pointage dont la longueur d'onde est encore comprise entre 1,00 µm et 1,10 µm, en pouvant être égale plus spécifiquement à 1,064 µm.

De préférence, le filtre qui recouvre la zone de confirmation du capteur d'image peut être un filtre interférentiel. De façon générale, ce filtre possède une fenêtre spectrale de transmission qui comprend la longueur d'onde du rayonnement de pointage, mais qui exclut le rayonnement naturel ou une partie au moins de celui-ci.

Préférablement, la zone de confirmation, où se trouve le filtre sur le capteur d'image, peut être située à proximité d'un bord périphérique de la matrice des éléments de pixels du capteur d'image, ou d'un coin de cette matrice, ou peut être adjacente à ce bord ou ce coin de matrice. De cette façon, une perturbation pour l'opérateur qui pourrait résulter de l'absence d'image de la scène qui soit produite par le rayonnement naturel à l'intérieur de cette zone de confirmation, est réduite.

L'image de la scène qui est saisie par le capteur d'image peut correspondre à un champ d'entrée optique qui possède une première dimension angulaire comprise entre 8 mrad (milliradian) et 80 mrad, et une deuxième dimension angulaire comprise entre 6 mrad et 60 mrad, cette seconde dimension étant mesurée perpendiculairement à la première dimension. Dans ce cas, le filtre peut avoir des dimensions telles qu'il corresponde, à travers l'objectif, à une portion du champ d'entrée optique qui possède une troisième dimension angulaire comprise entre 0,3 mrad et 3 mrad, lorsque cette troisième dimension est mesurée parallèlement à la première dimension du champ d'entrée optique, et qui possède une quatrième dimension aussi comprise entre 0,3 mrad et 3 mrad, lorsque cette quatrième dimension est mesurée parallèlement à la deuxième dimension du champ d'entrée optique.

Selon un premier perfectionnement de l'invention, qui est appelé dépointage automatique et applicable à un instrument conforme à l'invention, l'instrument peut comprendre en outre :
- un système de repère, adapté pour superposer une mire de visée à l'image saisie, à un endroit de cette image qui est déterminé par rapport au capteur d'image ; et
- un dispositif de dépointage, adapté pour tourner l'instrument d'un angle de dépointage fixe, de sorte qu'un élément de la scène qui est imagé sur la mire de visée avant qu'un dépointage soit initié, devienne imagé dans la zone de confirmation lorsque le dépointage est effectué.

Ainsi, il suffit à l'opérateur de diriger d'abord la ligne de visée optique de l'instrument pour que la cible apparaisse initialement sur la mire de visée, puis de déclencher le dispositif de dépointage pour que l'image de la cible soit directement amenée dans la zone de confirmation. L'opérateur voit alors dans l'image qui est saisie si la tache de désignation de cible est à l'emplacement de la cible ou à proximité de celle-ci, au sein de la scène imagée. Une telle procédure de contrôle de désignation de cible est encore plus rapide, plus simple et plus confortable pour l'opérateur puisque l'amplitude et l'orientation du dépointage sont prédéterminées.

Un second perfectionnement qui est applicable lorsque l'instrument est à dépointage automatique, concerne une harmonisation de la mire de visée. Pour cela, l'instrument peut comprendre en outre un système d'harmonisation qui est adapté pour ajuster une position de la mire de visée par rapport au capteur d'image, de sorte que la cible soit imagée en un centre de la zone de confirmation lorsque le dépointage est effectué, si la même cible était imagée en un centre de la mire de visée avant que le dépointage soit initié.

De façon générale, un instrument d'imagerie pour contrôler la désignation d'une cible, qui est conforme à l'invention, peut être à désignation externe, c'est-à-dire que le faisceau du rayonnement de pointage pour désigner la cible est produit par une source qui est indépendante de l'instrument d'imagerie.

Alternativement, l'instrument est dit à désignation interne lorsque la source du rayonnement de pointage fait partie de l'instrument, ou est solidaire de celui-ci. L'instrument comprend alors en outre :
- un système de désignation de cible, qui comprend une unité laser adaptée pour produire un faisceau du rayonnement de pointage, et qui est orientée pour envoyer ce faisceau du rayonnement de pointage sur la cible.

Alors, lorsque l'instrument est simultanément à désignation interne et à dépointage automatique, il peut être avantageusement adapté pour qu'une orientation du faisceau du rayonnement de pointage par rapport à la scène soit identique entre un premier instant auquel un élément de la scène est imagé sur la mire de visée avant que le dépointage soit initié, et un second instant auquel le même élément de la scène est imagé dans la zone de confirmation lorsque le dépointage est effectué. Autrement dit, la désignation de la cible par le faisceau de pointage n'est pas altérée par l'opération de dépointage. Selon un mode de réalisation possible, le dispositif de dépointage peut être adapté pour tourner conjointement l'objectif, le capteur d'image et l'unité laser. Mais l'instrument peut alors comprendre en outre un système de compensation qui est adapté pour maintenir le faisceau du rayonnement de pointage parallèlement à la ligne de visée optique de l'objectif et du capteur d'image tant que le dépointage n'est pas initié, et pour être efficace une fois que le dépointage est effectué de façon à compenser un effet du dépointage pour le faisceau du rayonnement de pointage. Pour cela, le système de compensation peut comprendre :
- une lame prismatique, transparente pour le faisceau du rayonnement de pointage, et à deux faces planes qui forment entre elles un angle de dièdre fixe ; et
- un mécanisme mobile qui est adapté pour introduire la lame prismatique sur un trajet du faisceau de rayonnement de pointage lorsqu'un dépointage est déclenché, et pour la retirer lorsque le dépointage est supprimé, ou vice-versa.

L'angle de dièdre est alors sélectionné pour que la lame prismatique produise, lorsqu'elle est introduite sur le trajet du faisceau de rayonnement de pointage, une déviation de ce faisceau qui est opposée ou identique à l'angle du dépointage. D'autres dispositifs de dépointage sont possibles, comme des dispositifs à translation d'une lentille orthogonalement à son axe, ou des dispositifs à déviation angulaire de miroir pour des composants optiques qui sont placés entre le système de pointage et la scène.

Un aspect supplémentaire de l'invention concerne un procédé de contrôle de désignation de cible, qui comprend de désigner sélectivement la cible dans la scène à l'aide d'un faisceau de rayonnement de pointage, et de simultanément visualiser la scène avec une tache de désignation de la cible qui est produite par une partie rétrodiffusée du rayonnement de pointage, en utilisant un instrument d'imagerie qui est conforme à l'invention.

D'autres particularités et avantages de la présente invention apparaîtront dans la description ci-après d'exemples de réalisation non limitatifs, en référence aux dessins annexés, dans lesquels :
- la figure 1 est un schéma optique d'un instrument d'imagerie conforme à l'invention ;
- les figures 2 et 3 représentent une scène et une cible telles que visualisables à l'aide de l'instrument d'imagerie de la figure 1 ; et
- les figures 4a et 4b illustrent un instrument d'imagerie à désignation interne, dans une position de pointage central (figure 4a) et dans une position de dépointage (figure 4b).

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

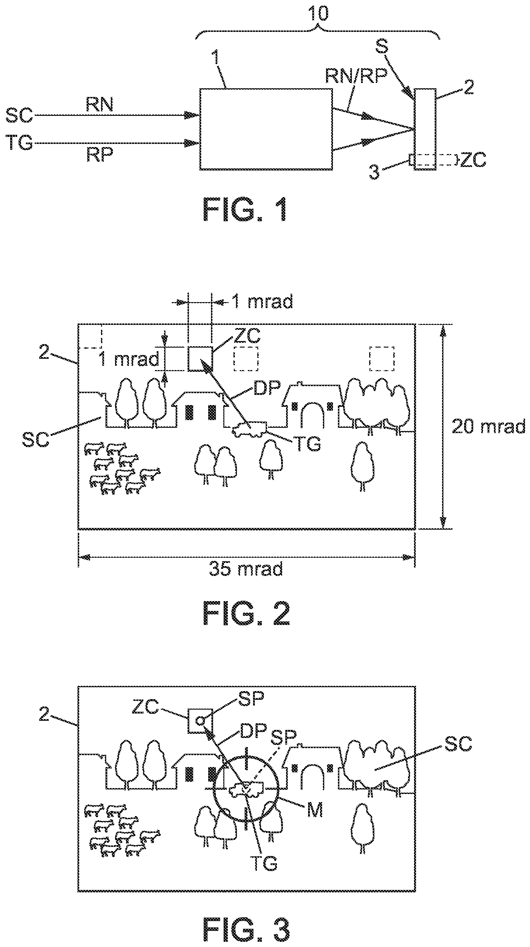

En référence à la figure 1, un instrument d'imagerie 10 qui est conforme à l'invention comprend un objectif 1 et un capteur d'image matriciel 2. Une surface photosensible S du capteur d'image 2 est située dans un plan focal de l'objectif 1, de sorte que l'objectif 1 forme une image d'une scène SC qui est distante devant l'objectif 1, sur le capteur d'image 2. L'instrument 10 est fonctionnel pour un rayonnement naturel noté RN, et pour un rayonnement de pointage noté RP. Le rayonnement naturel RN est émis ou diffusé par des éléments de la scène SC qui est comprise dans un champ d'entrée optique de l'instrument 10. Par exemple, le rayonnement naturel RN peut être situé dans l'intervalle spectral de lumière visible, qui est compris entre les valeurs de longueur d'onde 0,360 µm (micromètre) et 0,800 µm, voire jusqu'à 1,5 µm. Alternativement, le rayonnement naturel RN peut être du rayonnement infrarouge qui est compris entre les valeurs de longueur d'onde 3 µm et 15 µm. Un tel rayonnement naturel infrarouge permet des visions diurne et nocturne de la scène SC.

Le rayonnement de pointage RP peut être un rayonnement laser, par exemple à 1,06 µm. Un tel rayonnement est utilisé pour désigner une cible TG dans la scène SC. Le rayonnement de pointage RP est alors rétrodiffusé par une portion d'un élément de la scène SC sur lequel il est dirigé. Une partie du rayonnement de pointage RP qui est ainsi rétrodiffusée est collectée par l'objectif 1, et forme l'image de la portion d'élément de scène sur le capteur d'image 2. L'image qui est saisie par ce capteur 2 comprend une première contribution, formée par le rayonnement naturel RN, et une seconde contribution, formée par le rayonnement de pointage RP et superposée à la première contribution. Plus précisément, la seconde contribution est une tache de rayonnement de pointage, qui apparaît dans l'image à l'endroit de la scène SC où le faisceau du rayonnement de pointage est rétrodiffusé. Dans le cadre de la présente invention, les mots rétrodiffusé et rétro-réfléchi sont utilisés de façon équivalente en relation avec le rayonnement de pointage, bien que l'utilisation de l'un ou de l'autre dépende des caractéristiques de réflexion spéculaire ou de réflexion diffuse de l'élément de scène qui est éclairé par le faisceau de pointage. Par ailleurs, lorsque le faisceau du rayonnement de pointage éclaire une cible voulue, la tache du rayonnement de pointage qui est alors obtenue dans l'image qui est saisie par le capteur 2 est appelée tache de désignation de cible.

De façon usuelle, le capteur d'image matriciel 2 comprend un ensemble d'éléments photosensibles, ou éléments de pixels, qui sont disposés aux intersections de lignes et de colonnes à l'intérieur de la surface S du capteur.

La figure 2 montre un exemple d'image qui peut être saisie avec l'instrument 10. L'image fait apparaître les éléments de la scène SC, parmi lesquels peut se trouver la cible TG. La cible TG est un véhicule dans l'exemple représenté. Le champ d'entrée optique de l'instrument 10 peut avoir les dimensions angulaires 35 mrad (milliradian) x 20 mrad, à titre d'exemple.

Généralement, des faisceaux de rayonnement naturel RN ou de rayonnement de pointage RP qui sont parallèles à l'axe de visée optique de l'objectif 1 et du capteur d'image 2, convergent vers un point central de la surface S de ce capteur d'image 2. Par exemple, le véhicule qui peut constituer la cible TG peut se trouver au centre de l'image lorsque la ligne de visée optique de l'instrument 10 est dirigée vers ce véhicule. A partir de cette position de la ligne de visée optique, un dépointage de l'instrument 10 peut permettre de translater la scène SC et la cible TG dans l'image qui est saisie, pour amener la cible TG dans une zone prédéterminée de la surface S du capteur d'image 2, notée ZC. Un tel dépointage est désigné par DP dans la figure 2.

Selon l'invention, la zone ZC de la surface S du capteur d'image 2 est munie d'un filtre 3 (figure 1), qui transmet sélectivement le rayonnement de pointage RP par rapport au rayonnement naturel RN lorsque les rayonnements de pointage RP et naturel RN sont spectralement séparés. Alternativement, le filtre 3 peut transmettre sélectivement le rayonnement de pointage RP par rapport à une partie principale du rayonnement naturel RN qui est rejetée par le filtre 3, lorsque l'intervalle spectral du rayonnement de pointage RP est inclus dans celui du rayonnement naturel RN. Le filtre 3 peut être réalisé d'une façon connue de l'Homme du métier, notamment sous forme d'un empilement multicouche lorsqu'il est de type interférentiel. De telles réalisations pourront être trouvées dans les très nombreux ouvrages et articles qui sont disponibles au sujet des filtres optiques.

La zone ZC, qui est appelée zone de confirmation pour la raison qui sera expliquée par la suite, peut avoir les dimensions angulaires 1 mrad x 1 mrad lorsqu'elle est mesurée de la même façon que le champ d'entrée optique. Elle est entièrement recouverte par le filtre 3, de sorte que la partie de l'image qui est saisie par le capteur 2 dans la zone ZC est exclusivement ou essentiellement formée par le rayonnement de pointage RP.

En cas de désignation interne, il est avantageux que les dimensions de la zone ZC couvrent toutes les désharmonisations potentielles du faisceau de désignation par rapport à l'instrument 10. Ainsi, l'opérateur sait que la tache de désignation se trouve dans la zone ZC. A l'inverse, cette zone ZC n'est préférablement pas être trop étendue, afin de ne pas masquer l'environnement qui est proche de la cible, ni même les bords de la cible si celle-ci n'est pas de très petite taille.

La figure 3 correspond à la figure 2 lorsque la cible TG est éclairée par un faisceau du rayonnement de pointage RP. Dans la pratique, un tel faisceau du rayonnement de pointage RP est de type faisceau laser. La rétrodiffusion du rayonnement de pointage RP par la cible TG produit une contribution dans l'image sous la forme d'une tache d'éclairement SP qui est superposée localement à la scène SC. Toutefois, à cause du bruit photonique du capteur d'image 2, et de l'éloignement de la cible TG par rapport à l'instrument 10, cette tache SP peut avoir un contraste et un rapport signal-sur-bruit qui sont faibles par rapport à l'image de la scène SC qui est formée par le rayonnement naturel RN. Pour cette raison, elle est représentée dans la figure 3 en traits interrompus sur le véhicule qui constitue la cible TG.

Mais lorsque le dépointage DP amène l'image du véhicule dans la zone ZC, le rayonnement naturel RN ne produit plus d'image de la scène SC, ni de la cible TG, dans cette zone, alors que l'image de la tache SP du rayonnement de pointage RP subsiste. Cette image de la tache SP présente alors un contraste et un rapport signal-sur-bruit qui sont élevés dans la zone ZC. C'est pourquoi la tache SP est maintenant représentée en trait continu dans cette zone ZC (figure 3). L'image qui est visualisée est donc constituée en dehors de la zone ZC par la scène SC, et dans la zone ZC par la tache SP du rayonnement de pointage RP qui est rétrodiffusé sur le véhicule. Elle permet donc à un opérateur qui visualise cette image de confirmer que la tache de désignation de cible, SP, est correctement située par rapport au reste de la scène SC, et donc située sur la cible TG voulue. Pour cette raison, la zone ZC est appelée zone de confirmation.

Avantageusement, la zone de confirmation ZC peut être située dans la surface S du capteur d'image 2, à un endroit qui ne cause pas de gêne pour l'opérateur pour comprendre, interpréter ou inspecter le contenu d'image. Par exemple, cet endroit peut être à proximité d'un bord ou d'un coin de la surface S, de préférence dans une partie de cette surface S qui peut être occupée par une représentation du ciel dans le cas d'une scène extérieure. Dans la figure 2, les carrés en traits interrompus indiquent des positions préférées qui sont aussi possibles pour la zone de confirmation ZC dans la surface S.

La figure 3 montre aussi une mire de visée M qui est superposée à l'image saisie, par exemple au centre de la surface S du capteur d'image 2. Une telle superposition est couramment réalisée électroniquement, sur les données d'image qui sont lues du capteur 2, par rapport aux positions des éléments de pixels dans la surface S. Par exemple, la mire de visée M peut être à une position centrale à l'intérieur de la surface S.

Une telle mire de visée M est particulièrement utile lorsque l'amplitude et l'orientation du dépointage DP sont prédéterminées, autrement dit que le dépointage est automatique dans le jargon de l'Homme du métier. L'opérateur observe alors la scène SC qui comprend la cible TG par l'intermédiaire de l'instrument 10, en orientant l'instrument pour que la cible TG apparaisse dans la mire de visée M, si possible au centre de celle-ci. Il actionne alors le dépointage automatique, qui produit automatiquement une translation de l'image sur la surface S du capteur 2, telle que l'élément de la scène SC qui était situé au centre de la mire de visée M, c'est-à-dire la cible TG le cas échéant, devienne situé dans la zone de confirmation ZC. L'image qui est acquise lorsque le dépointage est ainsi produit permet à l'opérateur de vérifier en temps réel l'existence et la localisation du faisceau du rayonnement de pointage RP par rapport à la cible TG.

L'amplitude et l'orientation du dépointage DP dépendent donc de la position de la zone de confirmation ZC dans la surface S du capteur d'image 2. Notamment, le dépointage DP peut être sélectionné de sorte que la variation de direction qu'il produit dans le champ d'entrée optique de l'instrument 10 corresponde à un déplacement dans le plan focal, à partir du centre de la mire de visée M jusqu'au centre de la zone de confirmation ZC.

Des dispositifs de dépointage qui sont conçus pour appliquer automatiquement un dépointage d'amplitude et d'orientation prédéterminées, sont bien connus de l'Homme du métier, si bien qu'il n'est pas nécessaire de les décrire à nouveau ici.

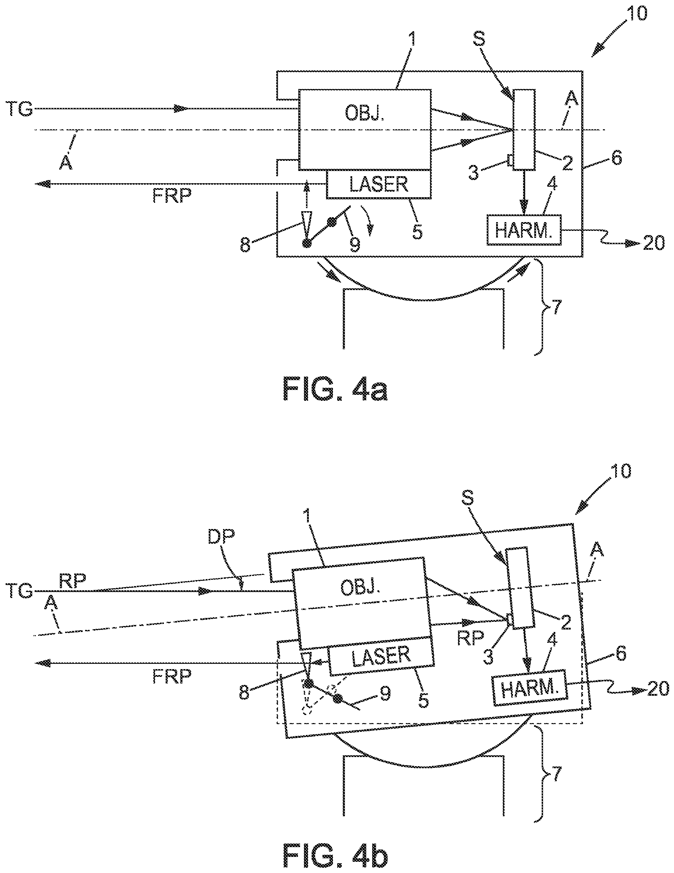

Les figures 4a et 4b illustrent un type particulier d'instruments conformes à l'invention, dits à désignation interne. Un instrument de ce type comprend en outre un système de désignation de cible, qui produit le faisceau du rayonnement de pointage, noté FRP. Ce système de désignation de cible incorpore notamment une unité laser 5, qui produit le faisceau FRP. Dans des configurations avantageuses de tels instruments à désignation interne, le système de désignation de cible est fixe par rapport à l'objectif 1 et au capteur d'image 2, par exemple à l'intérieur d'un boîtier commun 6. L'ensemble peut alors être monté sur un support à orientation variable 7, de préférence un support à deux axes de rotation. Un tel support 7 peut produire le dépointage DP évoqué plus haut, y compris de façon automatique sur déclenchement par l'opérateur. Mais il est alors nécessaire que l'orientation du faisceau FRP par rapport à la scène SC soit maintenue constante pendant tout le dépointage, pour que la tache d'éclairement SP du faisceau FRP soit visible à l'endroit de la cible TG dans la zone de confirmation ZC. Pour cela, l'instrument 10 peut comprendre en outre un système de compensation qui assure que le dépointage DP n'altère pas l'orientation du faisceau FRP bien que le système de désignation de cible soit entraîné par la rotation du support 7 avec l'objectif 1 et le capteur d'image 2. Dans des modes particuliers de réalisation d'un tel système de compensation, celui-ci peut comprendre une lame prismatique 8 et un mécanisme de déplacement de celle-ci, qui est désigné par la référence 9. Par exemple, le mécanisme de déplacement 9, aussi appelé mécanisme mobile, peut être un levier qui déplace la lame prismatique 8 entre deux positions prédéterminées. Selon une première possibilité, la lame prismatique 8 n'affecte pas le faisceau FRP avant le dépointage (figure 4a), et lorsque le dépointage DP est produit en basculant le boîtier 6 par l'intermédiaire du support à orientation variable 7, la lame prismatique 8 est insérée sur le trajet du faisceau FRP (figure 4b). La lame prismatique est conçue pour compenser exactement l'effet du basculement du boîtier 6, de sorte que la tache d'éclairement SP du faisceau FRP dans la scène SC reste immobile entre avant le déclenchement du dépointage DP et après qu'il soit produit. Pour cela, l'angle de dièdre de la lame prismatique 8, ainsi que son orientation, sont sélectionnés en fonction de l'amplitude et de l'orientation angulaire du dépointage DP. Pour ce premier mode de réalisation du système de compensation, l'angle de dièdre de la lame prismatique 8 et son orientation sont donc sélectionnés pour produire une déviation du faisceau FRP qui est opposée à la variation angulaire du boîtier 6 lors du dépointage DP.

Selon une seconde possibilité, la lame prismatique 8 peut être effective pour le faisceau FRP avant le dépointage DP, mais devient sans effet lorsque le dépointage DP est produit. Pour cela, l'angle de dièdre de la lame prismatique 8 et son orientation doivent être sélectionnés pour produire une déviation du faisceau FRP qui est identique à la variation angulaire du boîtier 6 lors du dépointage DP.

Plutôt que d'ajuster le dépointage DP en fonction des positions respectives de la mire de visée M et de la zone de confirmation ZC comme indiqué plus haut, il peut être préférable d'ajuster la position de la mire de visée M pour que le dépointage DP déplace exactement l'image selon le vecteur qui est issu du centre de la mire de visée M et qui aboutit au centre de la zone de confirmation ZC. Un tel ajustement est appelé harmonisation dans le jargon de l'Homme du métier. De façon connue, il peut être effectué électroniquement ou par voie logicielle, lorsque la mire de visée M est superposée aux signaux de lecture du capteur d'image 2 comme indiqué plus haut. Un tel système d'harmonisation est noté HARM. et désigné par la référence 4 dans les figures 4a et 4b. La référence 20 désigne une sortie de données d'image de l'instrument d'imagerie 10, pour connexion à un système de visualisation d'image. Selon un mode opératoire possible pour une telle harmonisation, des conditions d'imagerie sont sélectionnées, telles que la tache d'éclairement SP du rayonnement de pointage RP soit visible distinctement à l'intérieur et à l'extérieur la zone de confirmation ZC, dans l'image qui est saisie. L'instrument 10 est alors mis en position dépointée, et un écart est mesuré dans l'image saisie, entre le centre de la tache d'éclairement SP et le centre de la zone de confirmation ZC, en direction de ce dernier. Le dépointage DP est alors retiré, de sorte que la tache d'éclairement SP revienne en direction de la mire de visée M dans l'image nouvellement saisie, mais avec une erreur possible par rapport au centre de celle-ci. La mire de visée M est alors déplacée par rapport au capteur 2, à partir de la nouvelle position de la tache d'éclairement SP, d'un écart orienté qui est égal à celui qui a été mesuré précédemment en position dépointée.

Possiblement, lorsque le dépointage DP est effectué automatiquement, c'est-à-dire avec une amplitude et une orientation du dépointage qui sont prédéterminées, la mire de visée M peut être translatée dans l'image saisie en même temps et de la même façon que la scène SC et la tache d'éclairement SP.

Il est entendu que l'invention peut être reproduite en adaptant ou modifiant des aspects secondaires de celle-ci par rapport aux modes de réalisation qui ont été décrits en détail ci-dessus. En particulier, pour un instrument d'imagerie qui est conforme à l'invention et qui est à désignation interne, le système de désignation de cible peut être solidaire d'une partie fixe du dispositif de dépointage, si bien que le système de compensation de dépointage n'est plus nécessaire. Enfin, l'invention peut être appliquée à un instrument d'imagerie pour le contrôle de désignation de cible, qui est à désignation externe, c'est-à-dire que l'instrument d'imagerie est séparé et indépendant du système de désignation de cible.

## Revendications

1. Instrument d'imagerie (10) pour contrôler une désignation de cible (TG), comprenant :
- un objectif (1), adapté pour former une image d'une scène (SC) avec un premier rayonnement (RN), dit rayonnement naturel, qui provient d'éléments de la scène, et adapté pour que l'image formée contienne une contribution provenant d'une cible (TG) qui est contenue dans la scène, ladite contribution étant produite par un second rayonnement (RP), dit rayonnement de pointage, qui est rétrodiffusé par la cible ; et
- un capteur d'image (2) matriciel, comprenant des éléments de pixels qui sont chacun sensibles simultanément au rayonnement naturel (RN) et au rayonnement de pointage (RP), le capteur d'image étant disposé pour saisir l'image formée par l'objectif (1) ;
de sorte que l'image saisie constitue une représentation de la scène (SC), dans laquelle le rayonnement naturel (RN) et le rayonnement de pointage (RP) contribuent ensemble à faire apparaître au sein de la scène imagée, la cible (TG) qui est éclairée par le rayonnement de pointage,
l'instrument (10) étant **caractérisé en ce qu'**il comprend en outre :
- un filtre (3) qui recouvre une zone (ZC) limitée du capteur d'image (2), dite zone de confirmation, et qui est adapté pour transmettre aux éléments de pixels qui sont contenus dans la zone de confirmation, sélectivement le rayonnement de pointage (RP) à l'exclusion du rayonnement naturel (RN) ou à l'exclusion d'une partie dudit rayonnement naturel qui est séparée spectralement dudit rayonnement de pointage (RP),
si bien que lorsque l'instrument (10) est orienté vers la scène (SC) de façon que la cible (TG) soit imagée dans la zone de confirmation (ZC) du capteur d'image (2), la cible n'apparaît dans l'image saisie que par le rayonnement de pointage (RP) rétrodiffusé, ou apparaît dans ladite image saisie principalement par ledit rayonnement de pointage rétrodiffusé.

2. Instrument (10) selon revendication 1, adapté pour qu'une longueur d'onde du rayonnement naturel (RN) qui est détecté par les éléments de pixels du capteur d'image (2), soit comprise entre 3 µm et 15 µm, ou entre 0,36 µm et 1,5 µm, et pour qu'une longueur d'onde du rayonnement de pointage (RP) qui est aussi détecté par lesdits éléments de pixels du capteur d'image, soit comprise entre 1,00 µm et 1,10 µm.

3. Instrument (10) selon revendication 1 ou 2, dans lequel le filtre (3) qui recouvre la zone de confirmation (ZC) du capteur d'image (2) est un filtre interférentiel.

4. Instrument (10) selon l'une quelconque des revendications précédentes, dans lequel la zone de confirmation (ZC), où se trouve le filtre (3) sur le capteur d'image (2), est située à proximité d'un bord périphérique ou d'un coin d'une matrice formée par les éléments de pixels du capteur d'image.

5. Instrument (10) selon l'une quelconque des revendications précédentes, adapté pour que l'image de la scène (SC) qui est saisie par le capteur d'image (2) corresponde à un champ d'entrée optique ayant une première dimension angulaire comprise entre 8 mrad et 80 mrad, et une deuxième dimension angulaire comprise entre 6 mrad et 60 mrad, lorsque ladite seconde dimension est mesurée perpendiculairement à ladite première dimension,
et le filtre (3) possède des dimensions telles qu'il corresponde, à travers l'objectif (1), à une portion du champ d'entrée optique qui possède une troisième dimension angulaire comprise entre 0,3 mrad et 3 mrad, lorsque ladite troisième dimension est mesurée parallèlement à ladite première dimension du champ d'entrée optique, et une quatrième dimension aussi comprise entre 0,3 mrad et 3 mrad, lorsque ladite quatrième dimension est mesurée parallèlement à ladite deuxième dimension du champ d'entrée optique.

6. Instrument (10) selon l'une quelconque des revendications précédentes, comprenant en outre :
- un système de repère, adapté pour superposer une mire de visée (M) à l'image saisie, à un endroit de ladite image saisie qui est déterminé par rapport au capteur d'image (2) ; et
- un dispositif de dépointage, adapté pour tourner l'instrument (10) d'un angle de dépointage fixe, de sorte qu'un élément de la scène (SC) qui est imagé sur la mire de visée (M) avant qu'un dépointage (DP) soit initié, devienne imagé dans la zone de confirmation (ZC) lorsque le dépointage est effectué.

7. Instrument (10) selon la revendication 6, comprenant en outre un système d'harmonisation (4) adapté pour ajuster une position de la mire de visée (M) par rapport au capteur d'image (2), de sorte que la cible (TG) soit imagée en un centre de la zone de confirmation (ZC) lorsque le dépointage est effectué, si ladite cible était imagée en un centre de la mire de visée avant que le dépointage soit initié.

8. Instrument (10) selon l'une quelconque des revendications précédentes, comprenant en outre :
- un système de désignation de cible, comprenant une unité laser (5) adaptée pour produire un faisceau du rayonnement de pointage (FRP), et orienté pour envoyer le faisceau du rayonnement de pointage sur la cible (TG).

9. Instrument (10) selon la revendication 6 ou 7 et la revendication 8, adapté pour qu'une orientation du faisceau du rayonnement de pointage (FRP) par rapport à la scène (SC) soit identique entre un premier instant auquel l'élément de la scène est imagé sur la mire de visée (M) avant que le dépointage (DP) soit initié, et un second instant auquel ledit élément de la scène est imagé dans la zone de confirmation (ZC) lorsque le dépointage est effectué.

10. Instrument (10) selon la revendication 9, dans lequel le dispositif de dépointage est adapté pour tourner conjointement l'objectif (1), le capteur d'image (2) et l'unité laser (5), et l'instrument comprend en outre un système de compensation qui est adapté pour maintenir le faisceau du rayonnement de pointage (FRP) parallèlement à une ligne de visée optique de l'objectif et du capteur d'image tant que le dépointage (DP) n'est pas initié, et pour être efficace une fois que le dépointage est effectué de façon à compenser un effet dudit dépointage pour ledit faisceau du rayonnement de pointage.

11. Instrument (10) selon la revendication 10, dans lequel le système de compensation comprend :
- une lame prismatique (8), transparente pour le faisceau du rayonnement de pointage (RP) et à deux faces planes qui forment entre elles un angle de dièdre fixe ; et
- un mécanisme mobile (9), qui est adapté pour introduire la lame prismatique (8) sur un trajet du faisceau du rayonnement de pointage (FRP) lorsqu'un dépointage (DP) est déclenché, et pour retirer ladite lame prismatique dudit trajet lorsque le dépointage est supprimé, ou bien maintenir la lame prismatique sur le trajet du faisceau du rayonnement de pointage lorsqu'aucun dépointage n'est déclenché, et retirer ladite lame prismatique dudit trajet lorsque le dépointage est déclenché,
l'angle de dièdre étant sélectionné pour que la lame prismatique (8) produise, lorsqu'elle est introduite sur le trajet du faisceau du rayonnement de pointage (FRP), une déviation dudit faisceau du rayonnement de pointage qui est opposée ou identique à un angle du dépointage (DP).

12. Procédé de contrôle de désignation de cible, comprenant de désigner sélectivement une cible (TG) dans une scène (SC) à l'aide d'un faisceau de rayonnement de pointage (FRP), et de simultanément visualiser la scène avec une tache de désignation de la cible qui est produite par une partie rétrodiffusée du rayonnement de pointage, en utilisant un instrument d'imagerie (10) qui est conforme à l'une quelconque des revendications précédentes.

## Patentansprüche

1. Bilderzeugungsinstrument (10) zum Steuern einer Zielangabe (TG), das Folgendes umfasst:
- ein Objektiv (1), das dazu ausgelegt ist, ein Bild einer Szene (SC) mit einer ersten Strahlung (RN), d.h. natürlicher Strahlung, zu erzeugen, die von Elementen der Szene kommt, und so ausgelegt ist, dass das erzeugte Bild einen von einem Ziel (TG) stammenden Anteil enthält, der in der Szene enthalten ist, wobei dieser Anteil durch eine zweite Strahlung (RP), d.h. eine Peilstrahlung, erzeugt wird, die von dem Ziel rückgestreut wird; und
- einen Matrix-Bildsensor (2), der Pixelelemente umfasst, die jeweils gleichzeitig für natürliche Strahlung (RN) und Peilstrahlung (RP) empfindlich sind, wobei der Bildsensor dazu vorgesehen ist, das durch das Objektiv (1) erzeugte Bild zu erfassen;
sodass das erfasste Bild eine Darstellung der Szene (SC) bereitstellt, bei der die natürliche Strahlung (RN) und die Peilstrahlung (RP) gemeinsam dazu beitragen, inmitten der abgebildeten Szene das Ziel (TG) erscheinen zu lassen, das durch die Peilstrahlung beleuchtet wird,
wobei das Instrument (10) **dadurch gekennzeichnet ist, dass** es ferner Folgendes umfasst:
- einen Filter (3), der einen begrenzten Bereich (ZC) des Bildsensors (2), den sogenannten Bestätigungsbereich, abdeckt, und der dazu ausgelegt ist, wahlweise die Peilstrahlung (RP) mit Ausnahme der natürlichen Strahlung (RN) oder mit Ausnahme eines von der Peilstrahlung (RP) spektral getrennten Teils der natürlichen Strahlung, zu den Pixelelementen zu übertragen, die in dem Bestätigungsbereich enthalten sind;
sodass dann, wenn das Instrument (10) so zu der Szene (SC) ausgerichtet ist, dass das Ziel (TG) in dem Bestätigungsbereich (ZC) des Bildsensors (2) abgebildet wird, das Ziel nur durch die rückgestreute Peilstrahlung (RP) in dem erfassten Bild erscheint oder hauptsächlich durch die rückgestreute Peilstrahlung in dem erfassten Bild erscheint.

2. Instrument (10) nach Anspruch 1, das so ausgelegt ist, dass eine Wellenlänge der natürlichen Strahlung (RN), die von den Pixelelementen des Bildsensors (2) erfasst wird, zwischen 3 µm und 15 µm oder zwischen 0,36 µm und 1,5 µm beträgt, und dass eine Wellenlänge der Peilstrahlung (RP), die auch von den Pixelelementen des Bildsensors erfasst wird, zwischen 1,00 µm und 1,10 µm beträgt.

3. Instrument (10) nach Anspruch 1 oder 2, wobei der Filter (3), der den Bestätigungsbereich (ZC) des Bildsensors (2) abdeckt, ein Interferenzfilter ist.

4. Instrument (10) nach einem der vorhergehenden Ansprüche, wobei sich der Bestätigungsbereich (ZC), in dem sich der Filter (3) auf dem Bildsensor (2) befindet, in der Nähe einer Umfangskante oder einer Ecke einer Matrix befindet, die durch die Pixelelemente des Bildsensors gebildet wird.

5. Instrument (10) nach einem der vorhergehenden Ansprüche, das so ausgelegt ist, dass das Bild der Szene (SC), das von dem Bildsensor (2) erfasst wird, einem optischen Eingabefeld mit einer ersten Winkelgröße zwischen 8 mrad und 80 mrad und einer zweiten Winkelgröße zwischen 6 mrad und 60 mrad entspricht, wenn die zweite Größe senkrecht zu der ersten Größe gemessen wird,
wobei der Filter (3) solche Abmessungen besitzt, dass er durch das Objektiv (1) einem Abschnitt des optischen Eingabefeldes entspricht, der eine dritte Winkelgröße besitzt, die zwischen 0,3 mrad und 3 mrad beträgt, wenn die dritte Größe parallel zu der ersten Größe des optischen Eingabefeldes gemessen wird, sowie eine vierte Größe, die ebenfalls zwischen 0,3 mrad und 3 mrad beträgt, wenn die vierte Größe parallel zu der zweiten Größe des optischen Eingabefeldes gemessen wird.

6. Instrument (10) nach einem der vorhergehenden Ansprüche, das ferner Folgendes umfasst:
- ein Markierungssystem, das dazu ausgelegt ist, ein Visierbild (M) auf das erfasste Bild zu legen, und zwar an einer Stelle des erfassten Bildes, die in Bezug auf den Bildsensor (2) festgelegt wird; und
- eine Ablenkvorrichtung, die dazu ausgelegt ist, das Instrument (10) um einen festen Ablenkwinkel zu drehen, so dass ein Element der Szene (SC), das auf dem Visierbild (M) abgebildet wird, bevor eine Ablenkung (DP) eingeleitet wird, in dem Bestätigungsbereich (ZC) abgebildet wird, wenn die Ablenkung erfolgt.

7. Instrument (10) nach Anspruch 6, das ferner ein Harmonisierungssystem (4) umfasst, das dazu ausgelegt ist, eine Position des Visierbildes (M) in Bezug auf den Bildsensor (2) so einzustellen, dass das Ziel (TG) bei erfolgter Ablenkung in der Mitte des Bestätigungsbereichs (ZC) abgebildet wird, wenn das Ziel in der Mitte des Visierbildes abgebildet wurde, bevor die Ablenkung eingeleitet wird.

8. Instrument (10) nach einem der vorhergehenden Ansprüche, das ferner Folgendes umfasst:
- ein Zielangabesystem, umfassend eine Lasereinheit (5), die dazu ausgelegt ist, ein Peilstrahlungsbündel (FRP) zu erzeugen, und die so ausgerichtet ist, dass sie das Peilstrahlungsbündel auf das Ziel (TG) richtet.

9. Instrument (10) nach Anspruch 6 oder 7 und Anspruch 8, das so ausgelegt ist, dass eine Ausrichtung des Peilstrahlungsbündels (FRP) in Bezug auf die Szene (SC) zwischen einem ersten Moment, in dem das Element der Szene auf dem Visierbild (M) abgebildet wird, bevor die Ablenkung (DP) eingeleitet wird, und einem zweiten Moment, in dem das Element der Szene in dem Bestätigungsbereich (ZC) abgebildet wird, wenn die Ablenkung erfolgt, identisch ist.

10. Instrument (10) nach Anspruch 9, wobei die Ablenkvorrichtung dazu ausgelegt ist, das Objektiv (1), den Bildsensor (2) und die Lasereinheit (5) gemeinsam zu drehen, und das Instrument ferner ein Kompensationssystem umfasst, das dazu ausgelegt ist, das Peilstrahlungsbündel (FRP) parallel zu einer optischen Visierlinie des Objektivs und des Bildsensors zu halten, solange die Ablenkung (DP) nicht eingeleitet ist, und um wirksam zu sein, sobald die Ablenkung so erfolgt, dass ein Effekt dieser Ablenkung für das Peilstrahlungsbündel kompensiert wird.

11. Instrument (10) nach Anspruch 10, wobei das Kompensationssystem Folgendes umfasst:
- eine prismatische Klinge (8), die für das Peilstrahlungsbündel (RP) und auf zwei ebenen Flächen, die zwischen sich einen festen Flächenwinkel bilden, durchlässig ist; und
- einen beweglichen Mechanismus (9), der dazu ausgelegt ist, die prismatische Klinge (8) auf einer Bahn des Peilstrahlungsbündels (FRP) einzuführen, wenn eine Ablenkung (DP) ausgelöst wird, und die prismatische Klinge von der Bahn zurückzuziehen, wenn die Ablenkung unterdrückt wird, oder auch die prismatische Klinge auf der Bahn des Peilstrahlungsbündels zu halten, wenn keine Ablenkung ausgelöst wird, und die prismatische Klinge von der Bahn zurückzuziehen, wenn die Ablenkung ausgelöst wird,
wobei der Flächenwinkel so gewählt ist, dass die prismatische Klinge (8) beim Einführen auf der Bahn des Peilstrahlungsbündels (FRP) eine Ablenkung des Peilstrahlungsbündels erzeugt, die einem Ablenkwinkel (DP) entgegengesetzt oder mit diesem identisch ist.

12. Verfahren zum Steuern einer Zielangabe, bei dem wahlweise ein Ziel (TG) in einer Szene (SC) mit Hilfe eines Peilstrahlungsbündels (FRP) angegeben wird, und gleichzeitig die Szene mit einem Zielbezeichnungspunkt visualisiert wird, der von einem rückgestreuten Teil der Peilstrahlung erzeugt wird, wobei ein Bilderzeugungselement (10) verwendet wird, das einem der vorhergehenden Ansprüche entspricht.

## Claims

1. An imaging instrument (10) for checking designation of a target (TG), comprising:
- an objective (1), designed to form an image of a scene (SC) with first radiation (RN), called natural radiation, originating from elements of the scene, and designed so that the formed image contains a contribution originating from a target (TG) that is contained in the scene, said contribution being produced by second radiation (RP), called pointer radiation, that is backscattered by the target; and
- a matrix array image sensor (2), comprising pixel elements that are each simultaneously sensitive to the natural radiation (RN) and to the pointer radiation (RP), the image sensor being placed to capture the image formed by the objective (1);
so that the captured image forms a representation of the scene (SC), in which the natural radiation (RN) and the pointer radiation (RP) together contribute to making appear, within the imaged scene, the target (TG) that is irradiated with the pointer radiation,
the instrument (10) being **characterized in that** it furthermore comprises:
- a filter (3) that covers a limited region (ZC) of the image sensor (2), called the confirmation region, and that is suitable for selectively transmitting, to the pixel elements that are contained in the confirmation region, the pointer radiation (RP) to the exclusion of the natural radiation (RN) or to the exclusion of a part of said natural radiation which is spectrally separated from said pointer radiation (RP),
whereby when the instrument (10) is oriented toward the scene (SC) so that the target (TG) is imaged in the confirmation region (ZC) of the image sensor (2), the target appears in the captured image only via the backscattered pointer radiation (RP), or appears in said captured image mainly via said backscattered pointer radiation.

2. The instrument (10) as claimed in claim 1, designed so that a wavelength of the natural radiation (RN) that is detected by the pixel elements of the image sensor (2) is comprised between 3 µm and 15 µm, or between 0.36 µm and 1.5 µm, and so that a wavelength of the pointer radiation (RP) that is also detected by said pixel elements of the image sensor is comprised between 1.00 µm and 1.10 µm.

3. The instrument (10) as claimed in claim 1 or 2, wherein the filter (3) that covers the confirmation region (ZC) of the image sensor (2) is an interference filter.

4. The instrument (10) as claimed in any one of the preceding claims, wherein the confirmation region (ZC) in which the filter (3) is found on the image sensor (2) is located in proximity to a peripheral edge or corner of a matrix array formed by the pixel elements of the image sensor.

5. The instrument (10) as claimed in any one of the preceding claims, designed so that the image of the scene (SC) that is captured by the image sensor (2) corresponds to an optical entrance field having a first angular dimension comprised between 8 mrad and 80 mrad, and a second angular dimension comprised between 6 mrad and 60 mrad, when said second dimension is measured perpendicular to said first dimension,
and the filter (3) has dimensions such that it corresponds, through the objective (1), to a part of the optical entrance field that has a third angular dimension comprised between 0.3 mrad and 3 mrad, when said third dimension is measured parallel to said first dimension of the optical entrance field, and a fourth dimension also comprised between 0.3 mrad and 3 mrad, when said fourth dimension is measured parallel to said second dimension of the optical entrance field.

6. The instrument (10) as claimed in any one of the preceding claims, furthermore comprising:
- a sighting system, designed to superpose a crosshair (M) on the captured image, at a location within said captured image that is defined with respect to the image sensor (2); and
- a pointing-off device, designed to rotate the instrument (10) by a set pointing-off angle, so that an element of the scene (SC) that is imaged on the crosshair (M) before pointing-off (DP) is initiated, becomes imaged in the confirmation region (ZC) when pointing-off is carried out.

7. The instrument (10) as claimed in claim 6, furthermore comprising a harmonizing system (4) designed to adjust a position of the crosshair (M) with respect to the image sensor (2), so that the target (TG) is imaged in a center of the confirmation region (ZC) when pointing-off is carried out, if said target was imaged in a center of the crosshair before pointing-off was initiated.

8. The instrument (10) as claimed in any one of the preceding claims, furthermore comprising:
- a target-designating system, comprising a laser unit (5) designed to produce a beam of pointer radiation (FRP), and oriented to send the beam of pointer radiation to the target (TG).

9. The instrument (10) as claimed in claim 6 or 7 in combination with claim 8, designed so that an orientation of the beam of pointer radiation (FRP) with respect to the scene (SC) is identical between a first instant at which the element of the scene is imaged on the crosshair (M) before pointing-off (DP) is initiated, and a second instant at which said element of the scene is imaged in the confirmation region (ZC) when pointing-off is carried out.

10. The instrument (10) as claimed in claim 9, wherein the pointing-off device is designed to conjointly rotate the objective (1), the image sensor (2) and the laser unit (5), and the instrument furthermore comprises a compensating system that is designed to keep the beam of pointer radiation (FRP) parallel to an optical line of sight of the objective and of the image sensor as long as no pointing-off (DP) is initiated, and to become effective once pointing-off is carried out so as to compensate for an effect of said pointing-off on said beam of pointer radiation.

11. The instrument (10) as claimed in claim 10, wherein the compensating system comprises:
- a prismatic plate (8), which is transparent to the beam of pointer radiation (RP) and which has two planar faces that form therebetween a fixed dihedral angle; and
- a movable mechanism (9), which is designed to insert the prismatic plate (8) into a path of the beam of pointer radiation (FRP) when pointing-off (DP) is triggered, and to remove said prismatic plate from said path when pointing-off is cancelled, or to keep the prismatic plate on the path of the beam of pointer radiation when no pointing-off is triggered, and to remove said prismatic plate from said path when pointing-off is triggered,
the dihedral angle being selected so that the prismatic plate (8) produces, when it is inserted into the path of the beam of pointer radiation (FRP), a deviation of said beam of pointer radiation that is opposite or identical to an angle of the pointing-off (DP).

12. A method for checking target designation, comprising selectively designating a target (TG) in a scene (SC) using a beam of pointer radiation (FRP), and simultaneously viewing the scene with a target-designation spot that is produced by a backscattered portion of the pointer radiation, using an imaging instrument (10) as claimed in any one of the preceding claims.
